(19)

Europäisches
Patentamt

European
Patent Office

Office européen
des brevets

(11) **EP 2 824 637 A1**

(12) **EUROPEAN PATENT APPLICATION**

(43) Date of publication:
    **14.01.2015 Bulletin 2015/03**

(51) Int Cl.:
    ***G06T 7/00*** *(2006.01)*

(21) Application number: **13305993.1**

(22) Date of filing: **12.07.2013**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(71) Applicant: **Thomson Licensing
    92130 Issy-les-Moulineaux (FR)**

(72) Inventors:
    • **Sorgi, Lorenzo
      30163 Hannover (DE)**
    • **Jachalsky, Joern
      30974 Wennigsen (DE)**

(74) Representative: **Schmidt-Uhlig, Thomas
    Deutsche Thomson OHG
    European Patent Operations
    Karl-Wiechert-Allee 74
    30625 Hannover (DE)**

(54) **Method and apparatus for automatic keyframe extraction**

(57)     A method for extracting keyframes from a sequence of frames and an apparatus configured to perform the method are described. A subset selector (22) selects (10) a subset of keyframes that closely match a current camera position from already available keyframes. A determination unit (23) then determines (11) whether a current frame should be included in any of two keyframe sets.

**Fig. 5**

EP 2 824 637 A1

**Description**

**FIELD OF THE INVENTION**

The invention relates to the field of video analysis denoted as 3D Modeling, which groups the set of algorithms and systems devoted to the automatic generation of 3D digital models from video sequences. In particular, the invention aims at the automatic extraction of keyframes within the specific modeling architecture called Structure-from-Motion (SFM).

**BACKGROUND OF THE INVENTION**

Most computer vision systems need to process, quite often in real time, a massive amount of data coming from cameras, which nowadays are able to capture high-resolution images at very high frame rates. In order to achieve a certain speedup, many software architectures utilize a Keyframe Selection preprocessing. This is a general task aimed at the automatic identification of a subset of representative frames throughout the complete video sequence in order to significantly reduce the amount of data to be processed, while still retaining the overall information needed to accomplish the intended task.

An example of keyframe selection is the extraction of a summary from a video sequence [I,II,III,IV]. This class of algorithms has become popular quite early in the Internet era, as a considerable amount of video clips had been made available online for download and their content needed to be presented with a sort of video thumbnail. The volume of video data has grown continuously in the past years and has now reached a critical size, which makes a smart and fast browsing technology a crucial need for every multimedia distribution service. Therefore, it is still an interesting and important research topic.

The visual features that are most used to represent the quality of a frame as keyframe candidate are video motion, spatial activity, and presence of human faces. These cues are fused in different ways in a quality function, whose stationary points are assumed to be the keyframe indicators.

It is worth noting that in the context of video retrieval the principal aim is a compact but sufficiently comprehensive overview of the video content, thus a single keyframe from each video shot could be considered a sufficient representation. For other computer vision tasks, however, this assumption is too restrictive and this class of algorithms is intrinsically not applicable. Automatic image understanding, for example, needs a richer visual dataset. In [IX] the aim is to understand human action by analyzing video sequences, and for this purpose the authors propose a probabilistic framework to analyze the spatiotemporal distribution of action related visual features and compute a discrimination measure of each frame. The best frames are then selected and the cardinality of this keyframe set can be defined a-priori.

For lower level tasks, e.g. 2-view geometry estimation, camera re-sectioning or SFM, the subset of keyframes extracted from a video sequence must meet rather different constraints. Most of the estimation problems in 3D computer vision are indeed formulated in a feature-based context and this requires the establishment of a set of reliable correspondences across the set of processed frames. Accordingly, the keyframe subset should provide a high level of pairwise overlap, in order to retain enough correspondences. To achieve this goal, in [V] three measures are fused in a unique keyframe quality function, namely the ratio between the cardinalities of the matches set and the feature set, the spatial distribution of matches in the frame, and the homography error. In this approach, the homography error gives an indirect feedback on the camera baseline and prevents the system to select keyframes with baselines that are too short. In [VII], a similar technique specifically tailored to SFM is presented. The proposed measure is based on the number of survivor features that are shared with the previous keyframe, and a regularization term given by the ratio between the fundamental matrix and homography estimation errors. A measure using similar criteria, but probably more accurately formulated, is proposed in [VIII], where the GRIC score (GRIC: Geometric Robust Information Criterion) is used to evaluate the superiority of the fundamental matrix fitting over the homography model, and an additional score based on the epipolar geometry distance is introduced to indicate image blur and fast camera motion.

It has been observed that in [V,VII,VIII], as probably in many others similar approaches, a keyframe quality measure is defined by fusing non homogeneous cues, which may have a completely different numerical magnitude. This makes the definition of a proper set of weights for the fusion difficult. Furthermore, it is well known that the estimation of the 2-view geometrical entities only from feature points can be quite unreliable. Generally, this should be avoided in vision systems working on long video sequences.

In [VI, X] two systems for Simultaneous Localization and Mapping and real-time dense modeling have been presented. Although both architectures make an extended use of keyframes for camera tracking and updating of the scene model, nevertheless no hint is given by the authors regarding the criteria that are used for their selection across the video sequence. The only hint refers to the need of low motion blur, as it makes the camera tracking subtask quite unstable, but no further details about how this is measured is given.

All keyframe selection techniques known to be state of the art, and specifically those tailored to SFM processing, are based on the evaluation of a quality function, which fuses cues derived from the spatial and temporal distribution of image features and the accuracy of some geometrical entity estimation, namely the 2-view fundamental matrix or the 2-view homography.

It has been found that such an approach is somehow suboptimal concerning two different aspects.

A quality measure consisting of non-homogenous cues requires the definition of a proper weigh set in order to balance their influence in the final decision. This is a difficult task, as non-homogenous contributions have by definition quite different numerical ranges. Probability measures are usually a suitable solution for this problem, but the estimation of additional statistical models could be an undesired extra task for a real time system, especially when it is needed only as preprocessing step.

A second important weakness of most of the proposed techniques is the exploitation of 2-view geometrical entities, which in many cases are difficult to estimate and prone to gross error when the number of outliers becomes significant. Therefore, the estimation of such models should be used only when it is strictly needed.

## SUMMARY OF THE INVENTION

It is an object of the present invention to propose an improved solution for keyframe extraction from a sequence of frames.

According to the invention, a method for extracting keyframes from a sequence of frames comprises the steps of:

- selecting a subset of keyframes that closely match a current camera position from already available keyframes; and
- determining whether a current frame should be included in any of two keyframe sets.

Accordingly, an apparatus configured to extract keyframes from a sequence of frames comprises:

- a subset selector configured to select a subset of keyframes that closely match a current camera position from already available keyframes; and
- a determination unit configured to determine whether a current frame should be included in any of two keyframe sets.

Also, a computer readable storage medium has stored therein instructions enabling extracting keyframes from a sequence of frames, which when executed by a computer, cause the computer to:

- select a subset of keyframes that closely match a current camera position from already available keyframes; and
- determine whether a current frame should be included in any of two keyframe sets.

The present invention provides the design of a keyframe selection system specifically tailored to fulfill the requirements of the basic SFM tasks, namely the structure triangulation and the bundle adjustment. The underlying idea of the invention is the full exploitation of the intermediate results constantly available during the SFM processing, like the image matches and the corresponding 3D structure.

To achieve the objective, two processing steps are integrated in the SFM processing. Initially the subset of keyframes that best match the current camera position is selected from the available keyframe pool. In the second phase the analysis of different quality measures based on the structure visibility leads to the decision if the current frame should be included in any of the keyframe sets. In the bootstrap phase of the system no keyframe is available yet. Therefore, the first task is skipped and the first frame is simply added by default in the keyframe pool.

This design has a twofold benefit. It does not require any extra estimation tasks, which would reduce the potential speedup, and allows for a robust identification of two independent sets of keyframes, one for the triangulation and one for the bundle adjustment. This provides a higher selection accuracy with respect to the state of the art.

The proposed technique is essentially based on the analysis of the relation between the 3D structure, which is produced and progressively updated during the SFM processing, and its visibility in the current view and the set of keyframes. This is a first advantage of the proposed approach, which allows for the re-use of the intermediate results available within the system itself, unlike other techniques that require extra estimation tasks.

In the proposed SFM implementation, the spatial distribution of keyframes, irrespective of their temporal distance, guides the creation of a complex graph of matches across multiple views. This together with the associated 3D structure is used to assess whether the current frame is suited as a candidate to become a keyframe. Taking advantage of this complex interconnection among frames, which can be distant in time, allows on one side for a better evaluation of the current frame to be a candidate. On the other side, by leveraging the information inherent in the multiview matching, the proposed system can be kept free of drift with regard to the camera tracking. In contrast, most of the other SFM implementations limit the matching task to only pairs of successive frames. Such approaches are well known to be prone to severe drift with regard to the reconstruction accuracy.

Furthermore, bundle adjustment and structure triangulation are two important steps of a SFM processing that have different requirements. Both benefit from a certain amount of overlap among keyframes, but the structure triangulation should be performed as seldom as possible in order to prevent an undesired proliferation of dense points clusters in the 3D model. In contrast, bundle adjustment requires a higher level of overlap providing the best trade-off between the inter-camera baselines and the number of views observing the same points. As a consequence two different sets of keyframes meeting these different requirements are identified, unlike other state of the art approaches, which implement both tasks on the same set of keyframes.

The proposed solution is a rather general solution, which is applicable to any context in computer vision where a keyframe set needs to be extracted from a video sequence.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

## BRIEF DESCRIPTION OF THE DRAWINGS

Fig. 1    shows a high level flowchart of a keyframe selection system embedded within a progressive SFM architecture;

Fig. 2    shows three different cases of camera arrangements;

Fig. 3    shows results obtained by the keyframe extraction method for a constrained camera trajectory;

Fig. 4    shows results obtained by the keyframe extraction method for an unconstrained camera trajectory;

Fig. 5    schematically illustrates a method according to the invention; and

Fig. 6    schematically illustrates an apparatus configured to perform a method according to the invention.

## DETAILED DESCRIPTION OF PREFERED EMBODIMENTS

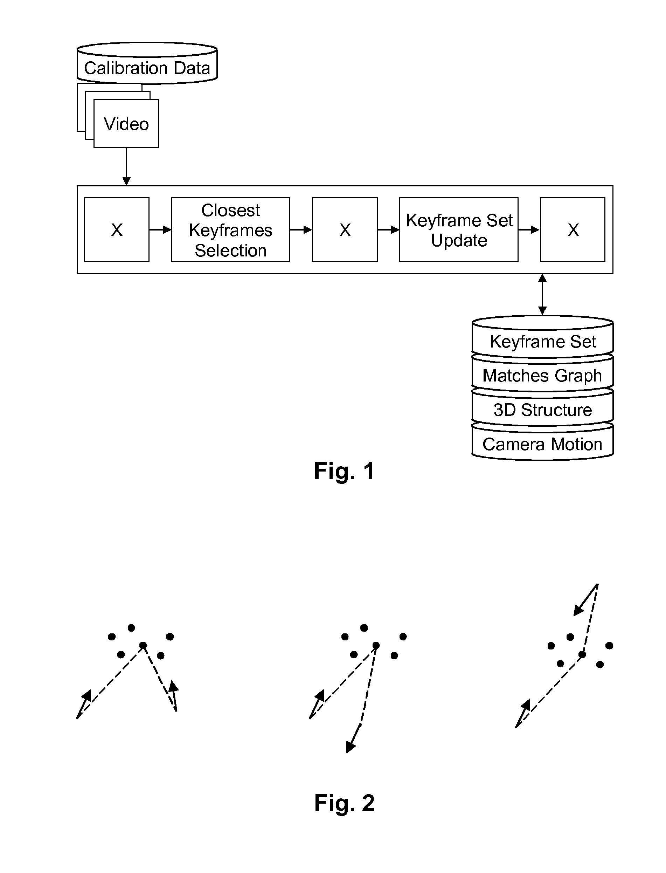

The keyframe selection system according to the present invention is embedded within a progressive SFM architecture shown as a high level flowchart in Fig. 1. The term "progressive SFM" refers to a sequential processing, which accepts as input consecutive frames from a video sequence or from a camera and progressively updates the scene 3D structure and the camera path.

It is assumed that the camera calibration data is provided as input, either pre-computed via an off-line calibration or estimated online by means of a self-calibration technique. Additional data, which are typically involved in an SFM processing, are the set of image correspondences established across different frames, the set of previous keyframes, the 3D structure and the camera trajectory. This heterogeneous dataset is used as input for the SFM subtasks, but it is also continuously updated as the processing proceeds.

In the proposed design two different subtasks are embedded into the SFM architecture, namely the Closest Keyframe Selection and the Update of Keyframe Sets, in order to build the keyframe sets. The SFM architecture comprises many other subtasks that are independent from the keyframe selection itself and can be implemented using many different algorithms. Therefore, in the following only the design of the two keyframe selection subtasks as well as the expected inputs and the outputs will be described in detail, without providing additional information regarding the other SFM subtasks.

The aim of the Closest Keyframe Selection is the localization of the best matching keyframe among those already available. Let $K_s$ and $K_t$ denote the sets of keyframes. $K_s$ is the set for the sparse bundle adjustment and $K_t$ the one for the structure triangulation. It is worth noticing that in the present design it is necessary to extract the closest keyframe from the set $K_s$, but not from the set $K_t$.

To accomplish this task the following inputs are assumed to be available, which are the output of the modules embedded in the first black-box of the SFM flowchart of Fig. 1:

- The calibration data of the camera system;
- The prediction of the camera pose for the current frame, represented by the Euclidean camera projection matrix $P_j = [R_j \ T_j]$;
- The sets of previously selected keyframes, denoted as $K_s$ and $K_t$, and the corresponding camera poses, which are represented in the form of Euclidean camera projection matrices;

- The 2D-3D correspondences between the keyframes and the structure.

In order to detect the best matching keyframe, a distance measure is defined that takes into account the cameras' 3D pose and their viewing frustum with respect to the visible structure.

Let us denote with $z_i$ the average range of the visible structure from the point of view of *i*-th camera, with $X$ the corresponding 3D point and with $[I|{-}X]$ a virtual camera centered in $X$.

As a simple way to check the frustum similarity between two cameras it is proposed to compare the visibility of the 3D virtual point $X$ from the two cameras and the visibility of the camera projection centers from the virtual camera.

This double check rejects the undesired cases of either cameras near in space facing towards different directions or cameras observing the same structure but from completely incomparable point of views, as shown in Fig. 2.

A distance metric is then defined as

$$d_{i,j} = 2 - \eta(x_i, x_j) - \eta(c_i, c_j), \qquad (1)$$

where $X_i$ and $x_j$ are the projections of the virtual point $X$ on the two cameras and $c_i$ and $c_j$ are the projections of the camera centers on the virtual camera.

In equation (1) $\eta()$ denotes the normalized cross correlation coefficient

$$\eta(a, b) = \frac{\langle a, b \rangle}{\max(\langle a, a \rangle, \langle b, b \rangle)} \qquad (2)$$

and $\langle a, b \rangle$ the scalar product.

The subset of the N-closest keyframes is then selected from the set $K_s$ by searching for the local minima of the distance measure $d_{i,j}$. The cardinality of the selected subset depends only on the specific SFM design, as multiple keyframes could be a valid support for several different subtasks. For the specific purpose of keyframe selection however, only the best keyframe is required.

The second phase of the keyframe management, i.e. the Update of Keyframe Sets, aims at the frame classification, namely taking the decision whether it should be included in any of the keyframe sets.

To accomplish this task the following input is assumed to be available, as a result of the second black-box in the SFM flowchart:

- The set of image matches between the two temporal-nearest frames;
- The set of image matches between the current frame and the best matching keyframe;
- The 3D structure and the corresponding projections into the current frame and in the best matching keyframe.

Two different measures are defined for the evaluation of a frame candidate.

The structure potential ratio $\rho_p$, which is given by the ratio between the cardinalities of two structure sets, namely the structure subset actually depicted in a view and the structure that the same view could potentially depict. The former is simply given by the number $S_i$ of matched features in the current frame, which have been linked to a triangulated track, whereas the latter is assumed to be given by the overall number $N_i$ of matched features in the current frame.

The structure potential ratio is used to detect a triangulation keyframe when it is below a given threshold. This measure has the twofold capability to detect frames that lose the visual overlap with the pre-computed structure and frames that contain some new highly textured area. Both of the circumstances are critical for the triangulation keyframe selection. The threshold for the triangulation key-frames selection is a user defined value. In the present implementation a threshold of 0.3 is used.

The second measure denoted as shared structure ratio $\rho_s$ is given by the ratio between the cardinality of the structure subset $S_{ik}$, which is simultaneously depicted in the best matching keyframe and in the current view, and the cardinality of the overall structure subset $S_k$ captured by the best matching keyframe. The best matching key-frame is selected using the metric defined in equation (1). The key-frame providing the minimum distance $d_{i,j}$ is used for the computation of the shared structure ratio $\rho_s$.

Similarly, the shared structure ratio is used to detect a bundle adjustment keyframe when $\rho_s$ is below a given threshold. In this case the decision is driven only by the overlap between the pairwise frame matching, as the measure is more relaxed than the structure potential ratio, and as a consequence the bundle adjustment keyframes are localized quite close in space as desired for a robust optimization dataset. It is worth noting that on the contrary the same distribution of keyframes if used also for triangulation leads to an undesired proliferation of 3D points.

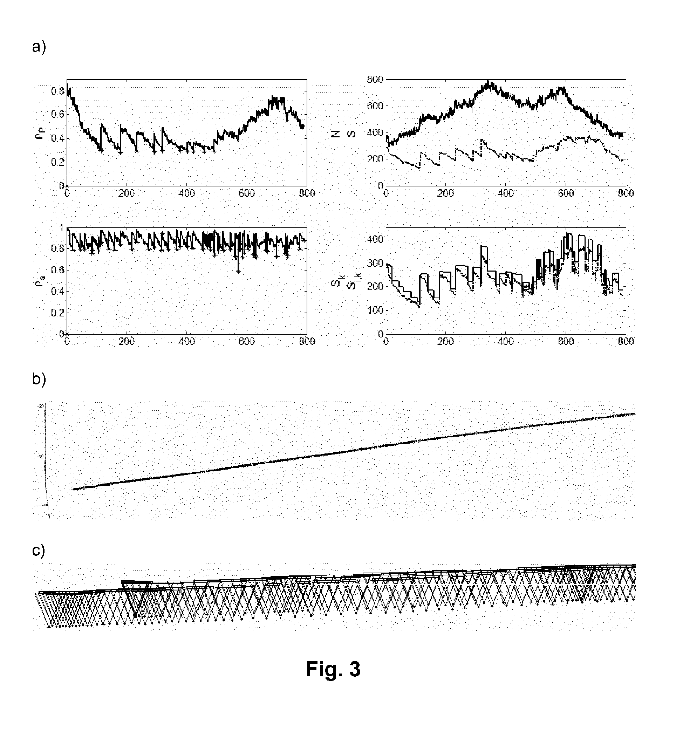

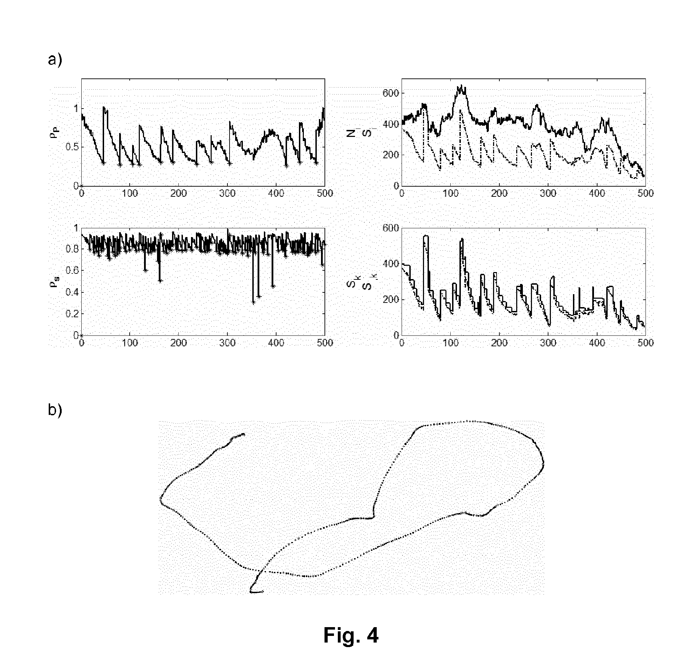

In Figs. 3 and 4 results obtained by applying the proposed technique to two different sequences are shown. The graphs show the temporal behavior of the proposed measure and the camera path with the keyframe highlighted.

The first sequence depicted in Fig. 3 was captured using a constrained camera trajectory along a straight line, performing a forward and backward move, as one can observe in the enlarged trajectory (see Fig 3c). Shown on the left in Fig. 3a) are keyframe measures extracted from the constrained video sequence, whereas on the right the corresponding structure cardinalities are depicted. In the bottom, in Fig. 3b), the camera path is shown with the keyframes highlighted as black stars for the bundle adjustment and black diamonds for the triangulation keyframes. In this case, as desired, the triangulation keyframes are selected only in the first half of the video, when the camera moves forward. During the second phase, when the camera is observing the same scene along the same path, no additional triangulation keyframes are triggered. The bundle adjustment keyframes instead are triggered regularly across the sequence, providing more stability for the optimization algorithm.

The second sequence depicted in Fig. 4 was captured from an unconstrained camera trajectory. Again, shown on the left in Fig. 4a) are keyframe measures extracted from the unconstrained video sequence, whereas on the right the corresponding structure cardinalities are depicted. In the bottom, in Fig. 4b), the camera path is shown with the keyframes highlighted as black stars for the bundle adjustment and black diamonds for the triangulation keyframes. In this case also the triangulation keyframes are triggered regularly across the sequence, but with a lower density compared to the bundle adjustment keyframes.

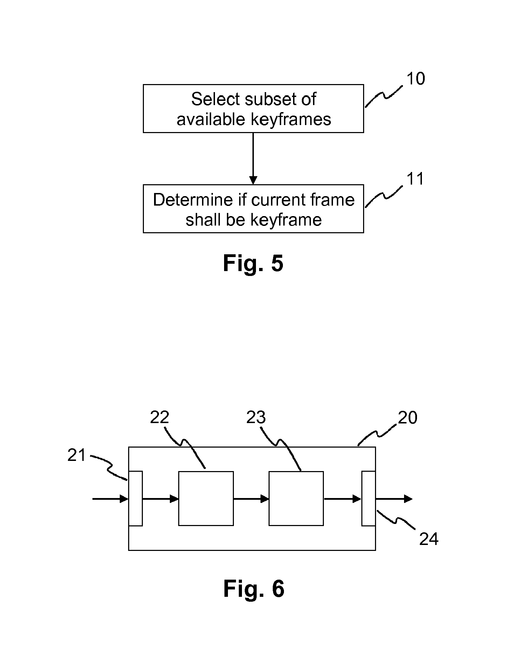

Fig. 5 schematically illustrates a method according to the invention for extracting keyframes from a sequence of frames. In a selection step 10 a subset of keyframes is selected that closely match a current camera position from already available keyframes. In a determining step 11 it is determined whether a current frame should be included in any of two keyframe sets, namely a bundle adjustment keyframe set and a triangulation keyframe set. The determination is based on an analysis of different quality measures based on a structure visibility.

An apparatus 20 configured to perform the method according to the invention is schematically depicted in Fig. 6. The apparatus 20 has an input 21 for receiving a sequence of frames and a subset selector 22 configured to select 10 a subset of keyframes that closely match a current camera position from already available keyframes. A determination unit 23 is configured to determine whether a current frame should be included in any of two keyframe sets. The results obtained by the subset selector 22 and the determination unit 23 are preferably output via an output 24. Of course, the two units 22, 23 may likewise be combined into single unit or implemented as software running on a processor.

## REFERENCES

[I] C. A. Dhawale et al.: "A Novel Approach Towards Keyframe Selection for Video Summarization", Asian Journal of Information Technology, Vol. 7 (2008), pp. 133-137.

[II] W. Wolf: "Key frame selection by motion analysis", Proceedings of the IEEE International Conference on Acoustics, Speech, and Signal Processing (ICASSP) (1996), pp. 1228-1231.

[III] M. Cooper et al.: "Discriminative techniques for keyframe selection", Proceedings of the IEEE International Conference on Multimedia and Expo (ICME) (2005), pp. 502-505.

[IV] F. Dirfaux: "Key frame selection to represent a video", Proceedings of the International Conference on Image Processing (ICIP) (2000), pp.275-278.

[V] J. K. Seo et al.: "3D Estimation and Key-Frame Selection for Match Move", Proceedings of the International Technical Conference on Circuits/Systems (TC-CSCC) (2003), pp. 1282-1285.

[VI] G. Klein et al.: "Improving the Agility of Keyframe-Based SLAM", Proceedings of the 10th European Conference on Computer Vision (ECCV) (2008), pp. 802-815.

[VII] M.-G. Park et al.: "Optimal key-frame selection for video-based structure-from-motion", Electronics Letters, Vol. 47 (2011), pp. 1367- 1369.

[VIII] M.T. Ahmed et al.: "Robust Key Frame Extraction for 3D Reconstruction from Video Streams", Proceedings of the Fifth International Conference on Computer Vision Theory and Applications (VISAP) (2010), pp. 231-236.

[IX] Z. Zhao et al.: "Information Theoretic Key Frame Selection for Action Recognition", Proceedings of the British Machine Vision Conference (BMVC) (2008), pp. 109.1-109.10.

[X] R. A. Newcombe et al.: "Live Dense Reconstruction with a Single Moving Camera", Proceedings of the IEEE Conference on Computer Vision and Pattern Recognition (CVPR) (2010), pp. 1498-1505.

**Claims**

1. A method for extracting keyframes from a sequence of frames, the method **comprising** the steps of:

   - selecting (10) a subset of keyframes that closely match a current camera position from already available keyframes; and
   - determining (11) whether a current frame should be included in any of two keyframe sets.

2. The method according to claim 1, **wherein** the two keyframe sets are a bundle adjustment keyframe set and a triangulation keyframe set.

3. The method according to claim 2, **wherein** the subset of keyframes that closely match a current camera position is selected (10) from the bundle adjustment keyframe set.

4. The method according to claim 2 or 3, **wherein** the step of determining whether a current frame should be included in any of two keyframe sets comprises analyzing different quality measures based on a structure visibility.

5. The method according to one of the preceding claims, **wherein** the step of selecting (10) the subset of keyframes that closely match a current camera position uses camera calibration data, a prediction of a camera pose for the current frame, and 2D-3D correspondences between the keyframes and the structure.

6. The method according to claim 4, **wherein** the different quality measures are a structure potential ratio and a shared structure ratio.

7. The method according to claim 6, **wherein** the structure potential ratio is given by the ratio between the cardinality of the structure subset actually depicted in a view and the cardinality of the structure that the same view could potentially depict.

8. The method according to claim 7, **wherein** the cardinality of the structure subset actually depicted in a view is given by the number of matched features in the current frame, which have been linked to a triangulated track, and wherein the cardinality of the structure that the same view could potentially depict is given by the overall number of matched features in the current frame.

9. The method according to claim 7 or 8, **wherein** the current frame is included in the triangulation keyframe set if the structure potential ratio is below a given first threshold.

10. The method according to claim 6, **wherein** the shared structure ratio is given by the ratio between the cardinality of the structure subset that is simultaneously depicted in a best matching keyframe and in the current view, and the cardinality of the overall structure subset captured by the best matching keyframe.

11. The method according to claim 10, **wherein** the current frame is included in the bundle adjustment keyframe set if the shared structure ratio is below a given second threshold.

12. An apparatus (20) configured to extract keyframes from a sequence of frames, **wherein** the apparatus comprises:

   - a subset selector (22) configured to select (10) a subset of keyframes that closely match a current camera position from already available keyframes; and
   - a determination unit (23) configured to determine (11) whether a current frame should be included in any of two keyframe sets.

**13.** A computer readable storage medium having stored therein instructions enabling extracting keyframes from a sequence of frames, which when executed by a computer, cause the computer to:

- select (10) a subset of keyframes that closely match a current camera position from already available keyframes; and
- determine (11) whether a current frame should be included in any of two keyframe sets.

**Fig. 1**

**Fig. 2**

a)

b)

c)

**Fig. 3**

a)

b)

**Fig. 4**

Select subset of
available keyframes ⟩ 10

↓

Determine if current frame
shall be keyframe ⟩ 11

**Fig. 5**

22    23    20

21

24

**Fig. 6**

Europäisches
Patentamt

European
Patent Office

Office européen
des brevets

**EUROPEAN SEARCH REPORT**

Application Number

EP 13 30 5993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VACCHETTI L. ET AL.: "Stable Real-Time 3D Tracking Using Online and Offline Information", PATTERN ANALYSIS AND MACHINE INTELLIGENCE, IEEE TRANSACTIONS ON, IEEE SERVICE CENTER, LOS ALAMITOS, CA, US, vol. 26, no. 10, October 2004 (2004-10), pages 1385-1391, XP011116546, ISSN: 0162-8828, DOI: 10.1109/TPAMI.2004.92 * abstract * * page 1385, column 1, last paragraph - column 2, paragraph 1 * * page 1386, column 1, section 3 * * page 1386, column 1, section 3.1 * * page 1386, column 1, section 3.4 and section 4 * | 1-13 | INV. G06T7/00 |

-----

TECHNICAL FIELDS
SEARCHED      (IPC)

G06T
G06K

The present search report has been drawn up for all claims

| Place of search | Date of completion of the search | Examiner |
|---|---|---|
| Munich | 14 February 2014 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. A. DHAWALE et al.** A Novel Approach Towards Keyframe Selection for Video Summarization. *Asian Journal of Information Technology,* 2008, vol. 7, 133-137
- **W. WOLF.** Key frame selection by motion analysis. *Proceedings of the IEEE International Conference on Acoustics, Speech, and Signal Processing,* 1996, 1228-1231
- **M. COOPER et al.** Discriminative techniques for key-frame selection. *Proceedings of the IEEE International Conference on Multimedia and Expo,* 2005, 502-505
- **F. DIRFAUX.** Key frame selection to represent a video. *Proceedings of the International Conference on Image Processing,* 2000, 275-278
- **J. K. SEO et al.** 3D Estimation and Key-Frame Selection for Match Move. *Proceedings of the International Technical Conference on Circuits/Systems,* 2003, 1282-1285
- **G. KLEIN et al.** Improving the Agility of Keyframe-Based SLAM. *Proceedings of the 10th European Conference on Computer Vision,* 2008, 802-815
- **M.-G. PARK et al.** Optimal key-frame selection for video-based structure-from-motion. *Electronics Letters,* 2011, vol. 47, 1367-1369
- **M.T. AHMED et al.** Robust Key Frame Extraction for 3D Reconstruction from Video Streams. *Proceedings of the Fifth International Conference on Computer Vision Theory and Applications,* 2010, 231-236
- **Z. ZHAO et al.** Information Theoretic Key Frame Selection for Action Recognition. *Proceedings of the British Machine Vision Conference,* 2008, 109.1-109.10
- **R. A. NEWCOMBE et al.** Live Dense Reconstruction with a Single Moving Camera. *Proceedings of the IEEE Conference on Computer Vision and Pattern Recognition,* 2010, 1498-1505